# EUROPÄISCHE PATENTANMELDUNG

(11) **EP 3 936 381 A1**
(43) Veröffentlichungstag der Anmeldung: **12.01.2022**
(21) Anmeldenummer: 21185178.7
(22) Anmeldetag: 12.07.2021
(51) Int. Cl.: B60P 3/36

(54) **CAMPINGFAHRZEUG MIT RAUMABTRENNER**

(30) Priorität: 10.07.2020 DE 102020118343
(71) Anmelder: Niesmann+Bischoff GmbH, 56751 Polch (DE)
(72) Erfinder: RUSCHE, Marc, 56656 Brohl-Lützing (DE); WEIBER, Andreas, 56220 Bassenheim (DE); SCHEIDT, Gordon, 56727 Mayen (DE); KLOTHMANN, Christian, 21635 Jork (DE); MÜLLER, Helena, 65428 Rüsselsheim (DE)
(74) Vertreter: Waller, Stefan

(57) **Zusammenfassung**

Bei einem Campingfahrzeug mit einem Raumabtrenner, ist der Raumabtrenner (4) in einer ersten Stellung in einem Küchenmöbel und/oder Liegemöbel, insbesondere Bettenblock (1), in einer unteren Position eingefahren angeordnet und kann senkrecht nach oben ausgefahren werden.

## Beschreibung

Die Erfindung betrifft ein Campingfahrzeug mit einem Raumabtrenner nach dem Oberbegriff des Patentanspruchs 1.

Unter einem Campingfahrzeug wird vorliegend ein Wohnmobil oder ein Wohnwagen verstanden, also vorzugsweise Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil oder Freizeitmobil. Ein Wohnwagen wird zum Beispiel alternativ auch als Caravan oder Campinganhänger bezeichnet. Campingfahrzeuge werden alternativ auch Freizeitfahrzeugen genannt.

Bei der Gestaltung eines Reisemobils spielen ein großzügiges Raumgefühl und, um dies zu erreichen, weite Blickachsen eine entscheidende Rolle. Wünschenswert ist es daher, weite Blickachsen zu ermöglichen, aber zugleich bei Bedarf den Wohnraum von dem Schlafraum abtrennen zu können. Gleichzeitig soll idealerweise eine solche Abtrennung als Bestandteil zum Beispiel der Küche auch Staumöglichkeiten bieten.

Bisher ist bekannt, in Reisemobilen einen festen Hochschrank oder aber auch einen Hochschrank mit einem horizontalen Möbelauszug anzuordnen, der von der Fahrzeugseitenwand bis zum Gang reicht. Wenn dies mit einer Schiebetür kombiniert wird, die den Durchgang auf Höhe dieses Schranks schließt, kann dadurch ein Schlafraum abgetrennt werden und zugleich auch Stauraum für Küchenutensilien oder Vorräte zur Verfügung gestellt werden.

Nachteilig an diesem Stand der Technik ist allerdings, dass die freien Sichtachsen über den Bereich der Küche hinweg nicht mehr gegeben sind und nur der Blick durch den Gang bei geöffneter Schiebetür verbleibt.

Aus der EP 2 238 864 A2 ist ein Schrankauszug für einen Möbelkorpus bekannt, der horizontal herausgezogen werden kann.

Der vorliegenden Erfindung liegt die Aufgabe zugrunde, ein Campingfahrzeug mit einem Raumabtrenner vorzusehen, der die zuvor genannten Nachteile vermeidet und platzsparend sowie multifunktionell ausgeführt ist.

Diese Aufgabe wird durch ein Campingfahrzeug mit einem Raumabtrenner mit den Merkmalen des unabhängigen Patentanspruchs 1 gelöst. Vorteilhafte Weiterbildungen der Erfindung sind in den Unteransprüchen angegeben.

Diese Aufgabe wird gelöst, indem bei einem Campingfahrzeug mit einem Raumabtrenner, der Raumabtrenner in einer ersten Stellung in einem Küchenmöbel und/oder Liegemöbel, insbesondere Bettenblock, in einer unteren Position eingefahren angeordnet ist und senkrecht nach oben ausgefahren werden kann.

Durch eine Kombination aus diesem vertikalem Möbelauszug als Raumabtrenner und einer Abtrennung für den daneben liegenden Gang, insbesondere ein Türelement, kann ein Raum vor und hinter diesen, insbesondere ein Schlafraum vollständig abgetrennt werden. Dabei verschwindet der Raumabtrenner in der Ausgangsstellung teils in einem Küchen- und/oder Bettenblock. Wenn der Raumabtrenner beispielsweise elektrisch betrieben nach oben gefahren wird, kann man die zum Beispiel in Fächern in diesem verstauten Gegenstände entnehmen. Vorteilhaft ergeben sich Offene Blickachsen und können in einem Bauteil zwei Funktionen erfüllt werden, sowohl eine Staumöglichkeit wie auch die Raumabtrennung. Es ergibt sich eine optimale Nutzung des Bauraums. Es ist ein hochwertiges, puristisches Design möglich. Glatte Flächen können umgesetzt werden und es sind keine Faltplissees, Vorhänge oder ähnliches erforderlich.

Vorteilhaft kann der Raumabtrenner nach oben in oben angeordnete Möbel, insbesondere Hängeschränke hineinfahren, indem in diesen eine Öffnung vorgesehen ist.

Bei einem Reisemobil sind Deckenschränke über der Küche, wie auch im Bettbereich üblich. Um einen geraden oberen Abschluss des Raumabtrenner zu ermöglichen, ist es daher vorteilhaft, wenn dieser in eine vorgesehene Öffnung dieser Möbel hinein fahren kann.

Die Öffnung kann durch ein Verdeckelement verschlossen sein, das sich beim Einfahren des Raumabtrenners öffnet, insbesondere eine Klappe.

Damit der Raumabtrenner bis zur Decke verfahren werden kann und trotzdem der optische Eindruck einer geschlossenen Deckenschrankfront erhalten bleibt, ist es wichtig, einen Mechanismus vorzusehen, der einen entsprechenden Teil der Möbelfront wegklappt, so dass der Raumabtrenner in diesen Bereich eintauchen kann.

In einer weiteren, vorteilhaften Ausgestaltung besteht das Verdeckelement aus einer senkrechten Frontfläche, die in eine horizontale Stellung nach oben schwingen kann, wobei über Scharnierelemente an der Frontfläche eine Bodenfläche angelenkt ist.

Wenn der Raumabtrenner auf die untere Kante der Blende bzw. Bodenfläche des Hängeschranks trifft, klappt diese automatisch ein und verschwenkt dabei die mit dieser Bodenfläche verbundene Frontfläche, bis beide zusammengefaltet in einer Position oberhalb des Raumabtrenners sich befinden.

Die Frontfläche wird in einer günstigen Ausgestaltung in einer Kulissenbahn geführt, sodass der Raumabtrenner bei seiner Vertikalbewegung die Frontfläche in die horizontale Stellung bewegt.

In einer weiteren Ausgestaltung wird durch eine zweite Kulissenführung an der Bodenfläche oder einem an der Frontfläche angelenkten Schwinghebel die Bewegungsbahn der Frontfläche definiert.

Dadurch werden die Bodenfläche und/oder Frontfläche über einen vorgegebenen Verfahrweg geführt. Fährt der Raumabtrenner wieder herunter, faltet sich das Verdeckelement automatisch durch die Schwerkraft wieder aus.

Der Raumabtrenner kann Aufbewahrungsfächer zum Verstauen von Gegenständen aufweisen.

Vorteilhaft ist der Raumabtrenner zwischen Küchenmöbel und Liegefläche, insbesondere Bettenblock, angeordnet.

Der Raumabtrenner kann durch einen elektrischen Antrieb ausgefahren und eingefahren werden.

Insbesondere kann damit eine gewisse Eigenhemmung erreicht werden und bei abgestelltem Motor der Raumabtrenner in jeder Höhenposition festgehalten werden. Dies ermöglicht die leichte Entnahme von Gegenständen aus den Staufächern, ohne dass eine zusätzliche Verriegelung erforderlich ist.

In einer günstigen Ausgestaltung kann durch ein Türelement, insbesondere eine Schiebetür, ein Gang neben dem Raumabtrenner verschlossen werden, sodass ein Bereich vor und hinter dem Raumabtrenner vollständig getrennt ist.

Dadurch können Wohn- und Schlafbereich vollständig voneinander abgetrennt werden, wenn sich beispielsweise auf der dem Raumabtrenner gegenüberliegenden Seite des Fahrzeugs ein fester Schrank mit der Aufnahme für die Schiebetür befindet.

Weitere Vorteile und Einzelheiten der Erfindung werden anhand der in den schematischen Figuren dargestellten Ausführungsbeispiels näher erläutert. Hierbei zeigt
- Fig. 1: einen perspektivischen Blick durch das Campingfahrzeug mit offenen Sichtachsen,
- Fig. 2: eine ausgefahrene Raumabtrennung mit Schiebetür mit Blickrichtung der Fig. 1,
- Fig. 3: eine zum Teil ausgefahrene Raumabtrennung,
- Fig. 4: eine vollständig ausgefahrene Raumabtrennung,
- Fig. 5: die Raumabtrennung der Fig. 5 mit zusätzlich geschlossener Schiebetür,
- Fig. 6: die Raumabtrennung allein,
- Fig. 7: ein Verdeckelement mit zwei Kulissenführungen in ausgeklappten Zustand,
- Fig. 8: das Verdeckelement der Fig. 7 in eingeklapptem Zustand,
- Fig. 9: ein Verdeckelement mit Schwinghebel in ausgeklappten Zustand und
- Fig. 10: eine Perspektivansicht des Verdeckelements der Fig. 9

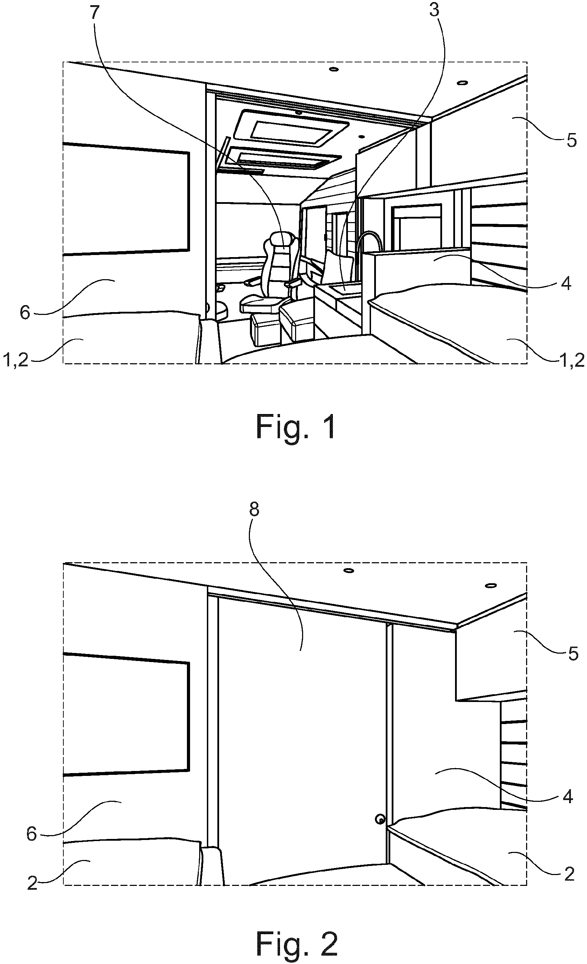

Die Fig. 1 zeigt einen perspektivischen Blick durch das Campingfahrzeug mit offenen Sichtachsen. Vor dem Bettenblock 1 mit zwei Betten 2 ist auf in Fahrtrichtung rechter Seite ein Küchenblock 3 angeordnet. Eine Raumabtrennung 4 ist zum Teil ausgefahren dargestellt. Oberhalb des Küchenblocks 3 sind Oberschränke 5 angeordnet. Gegenüber der Raumabtrennung 4 ist auf der anderen Fahrzeugseite ein Schrankelement 6 angeordnet. Beim Blick von hinten nach vorne in dem Fahrzeug in Richtung auf einen Beifahrersitz 7 ergibt sich ein großzügiger Eindruck mit freien Sichtachsen.

Die Fig. 2 zeigt die ausgefahrene Raumabtrennung 4 mit einer aus dem Schrankelement 6 ausgefahrenen und vollständig geschlossenen Schiebetür 8 mit Blickrichtung der Fig. 1. Die Raumabtrennung 4 ist dabei in die Oberschränke 5 in eine dafür vorgesehene Öffnung eingetaucht. Ein Schlafraum mit den Betten 2 ist nun vollständig von dem übrigen Raum des Campingfahrzeugs abgetrennt.

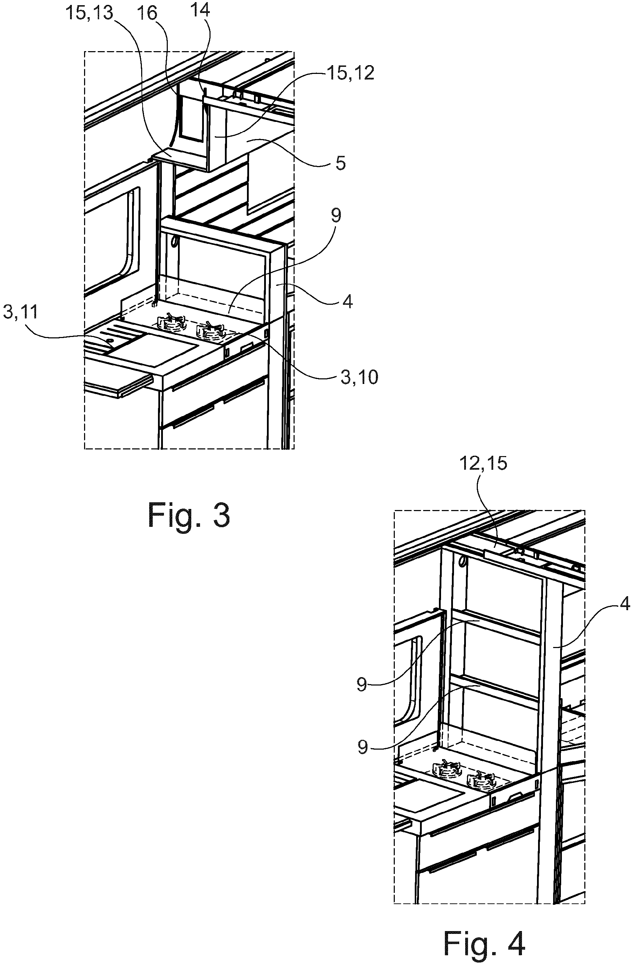

Die Fig. 3 zeigt die zum Teil ausgefahrene Raumabtrennung 4 in perspektivische Blickrichtung aus dem vorderen Bereich des Fahrzeugs. Vor der Raumabtrennung 4, die Fächer 9 zum Verstauen von Gegenständen oder Vorräten aufweist, ist der Küchenblock 3 mit einer Kochstelle 10 und einem Spülbecken 11 angeordnet. Oberhalb der Raumabtrennung 4 ist der Oberschrank 5 im Bereich über dem Küchenblock 3 nicht dargestellt. Ein Verdeckelement 15 mit einer Frontfläche 12 und einer Bodenfläche 13 kann geführt über eine erste Kulissenbahn 14 sowie eine zweite Kulissenbahn 16 nach oben sich zusammenfalten und wegklappen, wenn die Raumabtrennung 4 weiter nach oben verfahren wird.

Die Fig. 4 zeigt die vollständig ausgefahrene Raumabtrennung 4 der Fig. 3, die bei der Bewegung nach oben die Bodenfläche 13 des Verdeckelements 15 nach oben verschoben hat und dabei geführt durch die Kulissenbahnen 14, 16 die Frontfläche 12 in die Horizontale verschwenkt und auf die Bodenfläche 13 geklappt hat.

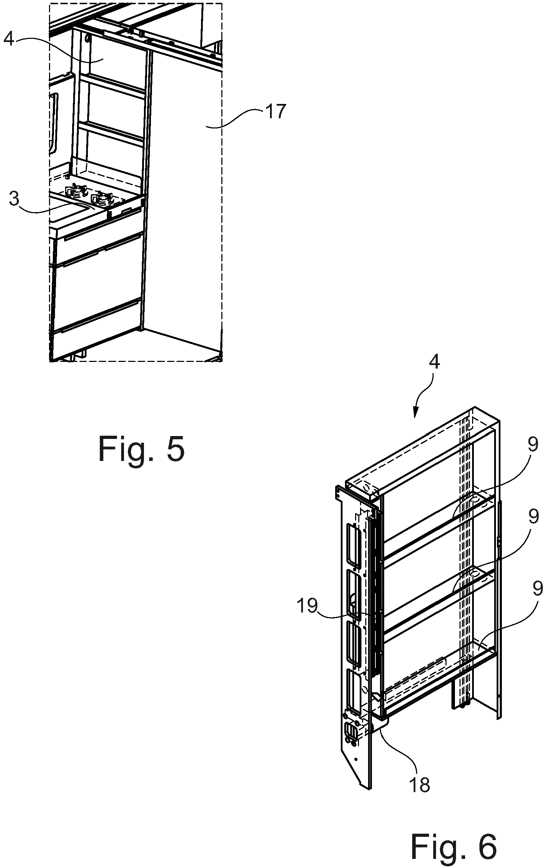

Die Fig. 5 zeigt die Raumabtrennung 4 der Fig. 5 vollständig ausgefahren hinter dem Küchenblock 3 mit zusätzlich einer geschlossener Schiebetür 17, durch die eine vollständige Abtrennung der Räume erfolgt. Die Schiebetür 17 wird dabei aus einem hier nicht dargestellten Schrankelement von rechts nach links ausgeschoben.

Die Fig. 6 zeigt die Raumabtrennung 3 allein mit den Staufächern 9 und einem elektrischen Antriebsmotor 18, über den an Führungen 19 die Raumabtrennung 3 nach oben ausgefahren werden kann.

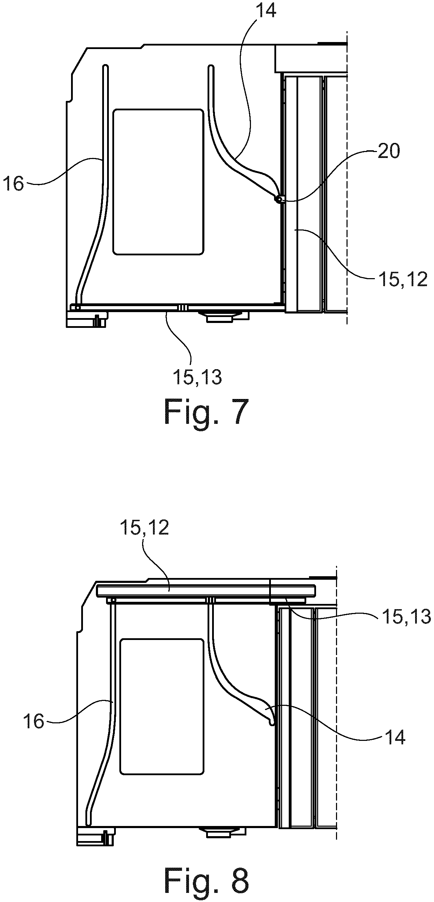

Die Fig. 7 zeigt das Verdeckelement 15 mit den zwei Kulissenführungen 14,16 in ausgeklappten Zustand. Die Frontfläche 12 ist mit einem Führungsstift 20 in der ersten Kulissenführung 14 geführt und die Bodenfläche 13 ist in der zweiten Kulissenführung 16 geführt. Die Bodenfläche 13 ist mit der Frontfläche 12 so über Scharnierelemente verbunden, dass diese sich zusammenfalten können.

Die Fig. 8 zeigt das Verdeckelement 15 der Fig. 7 in eingeklapptem Zustand. Bei der Bewegung nach oben drückt der Raumabtrenner 3 die Bodenfläche 13 nach oben, die geführt durch die zweite Kulissenführung 16 die Frontfläche 12 in der Darstellung nach rechts an ihrer Unterkante drückt und somit bereits aus der Vertikalen verdreht. Bei der weiteren Bewegung nach oben wird die Frontfläche 12 durch die erste Kulissenführung 14 auf die Bodenfläche 13 gefaltet bis zu der in der Fig. 8 dargestellten Endposition ganz oben. Die Raumabtrennung 3 kann in den entstehenden Freiraum von unten hineinfahren. Wird die Raumabtrennung 3 wieder nach unten herausgezogen, entfaltet sich das Verdeckelement 15 durch die Schwerkraft und verschließt die Lücke in den Oberschränken 5 optisch.

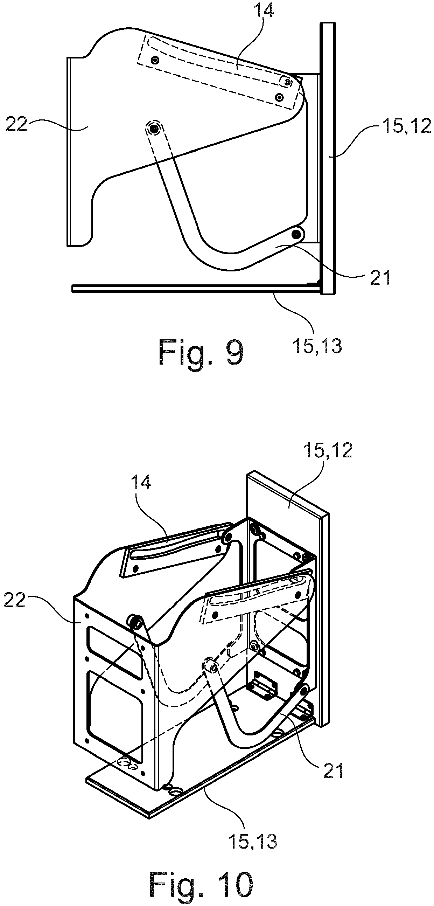

Die Fig. 9 zeigt ein weiteres Verdeckelement 15 mit einem Schwinghebel 21 in ausgeklappten Zustand. Dem vorherigen Ausführungsbeispiel entsprechende Bauelemente sind mit denselben Bezugszeichen versehen. An der Frontfläche 12 ist der Schwinghebel 21 befestigt, der an einem Halter 22 mit seiner anderen Seite angelenkt ist. In dem Halter 22 befindet sich auch die erste Kulissenführung 14. Dadurch wird bei einem Schub von unten auf die Frontfläche 12 deren Bewegung genau definiert und festgelegt bis zu einer Endposition, in der die Frontfläche 12 waagerecht liegt. Die Bodenfläche 13 ist über Scharnierelemente an der Frontfläche 12 befestigt und kann bis zu einem Winkel von 90° in der hier dargestellten Stellung sich gegenüber dieser verdrehen. Wenn die Raumabtrennung 3 von unten auf das Verdeckelement 15 drückt, werden die Frontfläche 12 und Bodenfläche 13 zusammengefaltet und in ihre obere, waagerechte Position verschoben.

Die Fig. 10 zeigt eine Perspektivansicht des Verdeckelements 15 der Fig. 9 mit der Frontfläche 12, der Bodenfläche 13, dem Halter 22 sowie der 1. Kulissen Führung 14 und dem Schwinghebel 21.

## Patentansprüche

1. Campingfahrzeug mit einem Raumabtrenner,
**dadurch gekennzeichnet,**
**dass** der Raumabtrenner (4) in einer ersten Stellung in einem Küchenmöbel und/oder Liegemöbel, insbesondere Bettenblock (1), in einer unteren Position eingefahren angeordnet ist und senkrecht nach oben ausgefahren werden kann.

2. Campingfahrzeug nach Anspruch 1,
**dadurch gekennzeichnet,**
**dass** der Raumabtrenner (4) nach oben in oben angeordnete Möbel, insbesondere Hängeschränke (5) hineinfahren kann, indem in diesen eine Öffnung vorgesehen ist.

3. Campingfahrzeug nach Anspruch 2,
**dadurch gekennzeichnet,**
**dass** die Öffnung durch ein Verdeckelement (15) verschlossen ist, das sich beim Einfahren des Raumabtrenners (4) öffnet, insbesondere eine Klappe.

4. Campingfahrzeug nach Anspruch 3,
**dadurch gekennzeichnet,**
**dass** das Verdeckelement (15) aus einer senkrechten Frontfläche (12) besteht, die in eine horizontale Stellung nach oben schwingen kann, wobei über Scharnierelemente an der Frontfläche (12) eine Bodenfläche (13) angelenkt ist.

5. Campingfahrzeug nach Anspruch 4,
**dadurch gekennzeichnet,**
**dass** die Frontfläche (12) in einer Kulissenbahn (14) geführt ist, sodass der Raumabtrenner (4) bei seiner Vertikalbewegung die Frontfläche (12) in die horizontale Stellung bewegt.

6. Campingfahrzeug nach Anspruch 5,
**dadurch gekennzeichnet,**
**dass** durch eine zweite Kulissenführung (16) an der Bodenfläche (13) oder einem an der Frontfläche (12) angelenkten Schwinghebel (21) die Bewegungsbahn der Frontfläche (12) definiert wird.

7. Campingfahrzeug nach einem der vorhergehenden Ansprüche,
**dadurch gekennzeichnet,**
**dass** der Raumabtrenner (4) Aufbewahrungsfächer (9) zum Verstauen von Gegenständen aufweist

8. Campingfahrzeug nach einem der vorhergehenden Ansprüche,
**dadurch gekennzeichnet,**
**dass** der Raumabtrenner (4) zwischen Küchenmöbel und Liegefläche, insbesondere Bettenblock (1), angeordnet ist.

9. Campingfahrzeug nach einem der vorhergehenden Ansprüche,
**dadurch gekennzeichnet,**
**dass** der Raumabtrenner (4) durch einen elektrischen Antrieb ausgefahren und eingefahren werden kann.

10. Campingfahrzeug nach einem der vorhergehenden Ansprüche,
**dadurch gekennzeichnet,**
**dass** durch ein Türelement, insbesondere eine Schiebetür (17), ein Gang neben dem Raumabtrenner (4) verschlossen werden kann, sodass ein Bereich vor und hinter dem Raumabtrenner (4) vollständig getrennt ist.
